# EUROPEAN PATENT APPLICATION

(11) **EP 4 826 507 A1**
(43) Date of publication of application: **21.10.2026**
(21) Application number: 24911083.4
(22) Date of filing: 24.12.2024
(51) Int. Cl.: G06F 3/06, G06F 11/10

(54) **MEMORY MANAGEMENT METHOD AND RELATED DEVICE**

(30) Priority: 29.12.2023 CN 202311863931
(71) Applicant: Huawei Technologies Co., Ltd., Shenzhen, Guangdong 518129 (CN)
(72) Inventor: QIAO, Lizhong, Shenzhen, Guangdong 518129 (CN); CHEN, Haiwu, Shenzhen, Guangdong 518129 (CN); CHEN, Shiping, Shenzhen, Guangdong 518129 (CN); BO, Yinsong, Shenzhen, Guangdong 518129 (CN)
(74) Representative: Huawei European IPR
(86) International application number: PCT/CN2024/141685
(87) International publication number: WO 2025/140156

(57) **Abstract**

This application provides a storage management method. The method is implemented by a core (core) of a processor by executing a program code, to manage data in a storage. This helps identify, using software-based methods, whether data stored in a memory changes due to memory reliability issues. Compared with ECC technologies, which require a controller and/or a DDR chip to support ECC features, the memory management method provided in this application does not necessitate any modifications to a hardware circuit design, helping reduce requirements for memory management on DDR hardware, and expand usage scenarios of the memory management method. In some scenarios, ECC chips of a CPU mini system may be removed to reduce hardware costs. This application further provides a management apparatus, a computer device, computer-readable storage medium, and computer program product corresponding to the management method.

## Description

This application claims priority to Chinese Patent Application No. 202311863931.X, filed with the China National Intellectual Property Administration on December 29, 2023 and entitled "STORAGE MANAGEMENT METHOD AND RELATED DEVICE", which is incorporated herein by reference in its entirety.

### TECHNICAL FIELD

This application relates to the field of storage technologies, and in particular, to a storage management method and a related device.

### BACKGROUND

In a computer system architecture, a dynamic random access memory (dynamic random access memory, DRAM) is commonly used as a memory. As a volatile storage medium, the DRAM stores data as 0s and 1s by utilizing an amount of electricity stored in a capacitor. Due to capacitor leakage, electric charges can be maintained only for a short time. The capacitor leakage causes charge drift, which makes stored data corrupted and results in faults like bit (bit) flip. With the evolution of manufacturing processes, especially in the background of diversification and localization, data invalidity caused by bit flip becomes increasingly severe. Therefore, identifying whether the data stored in the DRAM changes is particularly important.

### SUMMARY

This application provides a storage management method and a related device, to determine whether data stored in a storage changes.

According to a first aspect, this application provides a storage management method, where a storage is connected to a processing unit through a memory controller, a first address and a second address in the storage are respectively for storing target data and checking data of the target data, and the processing unit runs an executable file to implement the method. The method may include: separately reading data of the first address and data of the second address from the storage using the memory controller; and determining reliability information of the data of the first address by using the data of the second address, where the reliability information indicates that the data of the first address is consistent with or inconsistent with the target data. This helps identify, in a software means, whether data stored in a memory changes due to a memory reliability issue. Compared with an ECC technology that needs a controller and/or a DDR chip to support an ECC feature, a memory management method provided in this application does not need to change a design of a hardware circuit, helping reduce a requirement for memory management on DDR hardware, and expand usage scenarios of the memory management method.

Optionally, separately reading the data of the first address and the data of the second address from the storage using the memory controller includes: periodically and separately reading the data of the first address and the data of the second address from the storage using the memory controller.

Optionally, the target data is data in one or more other executable files than the executable file. This helps check, when a core runs the executable file, another executable file that is not invoked, and helps identify in advance an error of the another executable file that is not invoked, to help perform pre-processing (for example, reloading) before the another executable file is invoked. Compared with an ECC manner of checking only another executable file being invoked, this manner helps avoid abnormal device restart caused by a multi-bit error in the executable file being invoked.

Optionally, the target data is a program code segment, a program static data segment, or a program dynamic data segment in the one or more other executable files. As countermeasures for errors of different types of segments in the executable file are generally different, reviewing a segment of a type in the executable file helps perform a more accurate countermeasure when an error of the segment of the type is identified.

Optionally, the target data includes data in a duplicate of the executable file. This helps ensure data integrity of the executable file.

Optionally, the executable file is stored at a third address in the storage, and the executable file run by the core when the core performs the management method in this application is stored in a same storage as to-be-managed data. This helps reduce a quantity of storages on which the core depends to perform the method in this application, and expand an application scenario of the method in this application.

Optionally, the checking data of the target data is a feature value of the target data, which helps save storage resources of the storage. Optionally, the checking data of the target data is the target data. In this way, the checking data may be used as a backup of the target data, which helps improve security of the target data.

Optionally, the method further includes: calculating the checking data of the target data; and writing the checking data of the target data into the second address using the memory controller. In this way, even if the checking data of the target data is not stored in the storage, the core may generate the checking data of the target data by running the executable file and write the checking data into the storage. This helps expand an application scenario of the method in this application.

Optionally, the reliability information indicates that the data of the first address is inconsistent with the target data, and the method further includes: reloading the target data into the storage; and/or reporting the reliability information to an upper computer connected to the processing unit. This helps rectify an error in the target data before the target data is invoked, and reduce or avoid a major problem like abnormal device restart.

Optionally, the storage is a memory, a flash memory, or a hard disk.

According to a second aspect, this application provides a storage management apparatus, where a storage is connected to a processing unit through a memory controller, a first address and a second address in the storage are respectively for storing target data and checking data of the target data, and the processing unit runs an executable file to generate the management apparatus. The management apparatus includes a reading module and a determining module. The reading module is configured to separately read data of the first address and data of the second address from the storage using the memory controller. The determining module is configured to determine reliability information of the data of the first address by using the data of the second address, where the reliability information indicates that the data of the first address is consistent with or inconsistent with the target data.

Optionally, the reading module may be configured to separately read the data of the first address and the data of the second address using the memory controller from the storage after first data and checking data of the first data are written into the storage. Alternatively, the reading module may periodically and separately read the data of the first address and the data of the second address from the storage using the memory controller, for example, manage data in the executable file through a timing task. Specifically, the core may add a memory management task to a timer, and set a size of a corresponding time slice. After the time slice is used up, the core manages data in an executable file already stored in a DDR.

Optionally, the target data is data in one or more other executable files than the executable file.

Optionally, the target data is a program code segment, a program static data segment, or a program dynamic data segment in the one or more other executable files.

Optionally, the target data includes data in a duplicate of the executable file.

Optionally, the executable file is stored in the storage, for example, stored at a third address in the storage.

Optionally, the checking data of the target data is the target data or a feature value of the target data.

Optionally, the management apparatus further includes a calculation module and a writing module. The calculation module is configured to calculate the checking data of the target data, and the writing module is configured to write the checking data of the target data into the second address using the memory controller.

Optionally, the management apparatus further includes an exception handling module. The exception handling module is configured to: when the reliability information indicates that the data of the first address is inconsistent with the target data, reload the target data into the storage, and/or report the reliability information to an upper computer connected to the processing unit.

According to a third aspect, this application provides a computer device, where the computer device may include a processing unit and a memory controller. The processing unit is connected to the memory controller, the memory controller is configured to connect to a storage, and the processing unit is configured to execute the method according to the first aspect or any possible implementation of the first aspect by running an executable file.

Optionally, the processing unit and the memory controller are integrated into a same chip. Alternatively, the processing unit and the memory controller are independently disposed.

Optionally, the processing unit may be a processor or one or more processor cores (core) in a processor.

Optionally, the computer device further includes the storage.

Optionally, the computer device may further include an upper computer, and the upper computer is connected to the processing unit.

Optionally, the executable file is stored in an external memory of the computer device. When instructions are decoded and executed by a processor of the computer device, the memory inside the computer device temporarily stores some or all content of the foregoing instructions. Optionally, some content of the instructions is stored in the external memory of the computer device, and other content of the instructions is stored in the memory inside the computer device.

A fourth aspect of this application provides a computer-readable storage medium, where the computer-readable storage medium stores instructions (or computer-readable instructions, computer program instructions, a functional program, or a program code). When these instructions are run on a computer device, the computer device is caused to perform the method according to the first aspect or any possible implementation of the first aspect in embodiments of this application.

A fifth aspect of this application provides a computer program product. When instructions (or computer-readable instructions, computer program instructions, a functional program, or a program code) included in the computer program product are executed by a computer device, the method according to the first aspect or any possible implementation of the first aspect in embodiments of this application is implemented.

Apparatuses provided in embodiments of this application may be configured to perform the method in the foregoing corresponding embodiment. Therefore, for technical effects that can be achieved in apparatus embodiments of this application, refer to technical effects achieved in the foregoing corresponding method embodiment. Details are not described herein again.

### BRIEF DESCRIPTION OF DRAWINGS

FIG. 1 is a diagram of a computer device according to an embodiment of this application;
FIG. 2-1 shows an example of a diagram of a principle of side-band ECC;
FIG. 2-2 shows an example of a diagram of a principle of in-line ECC;

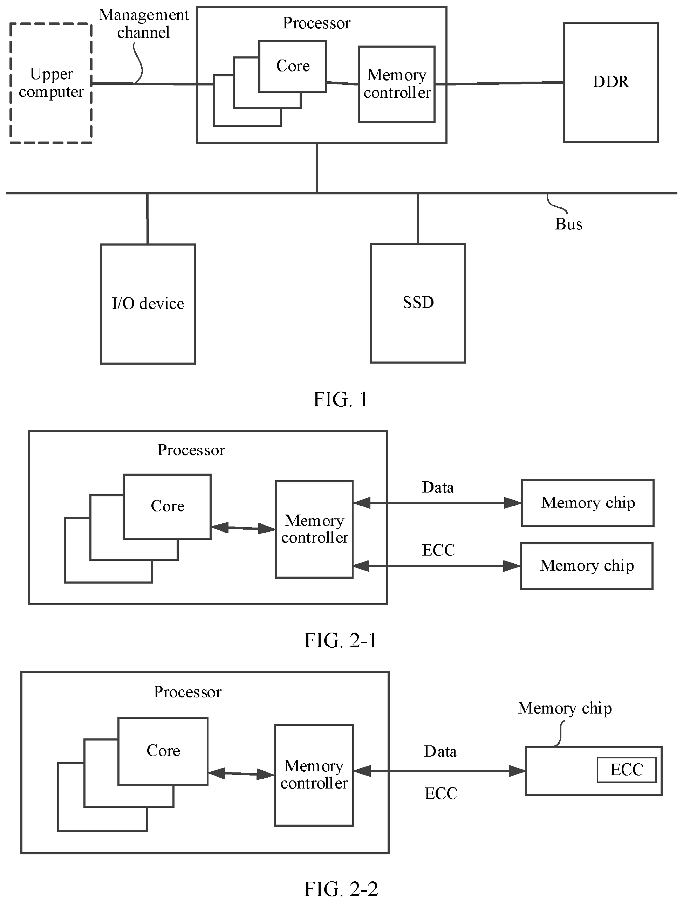

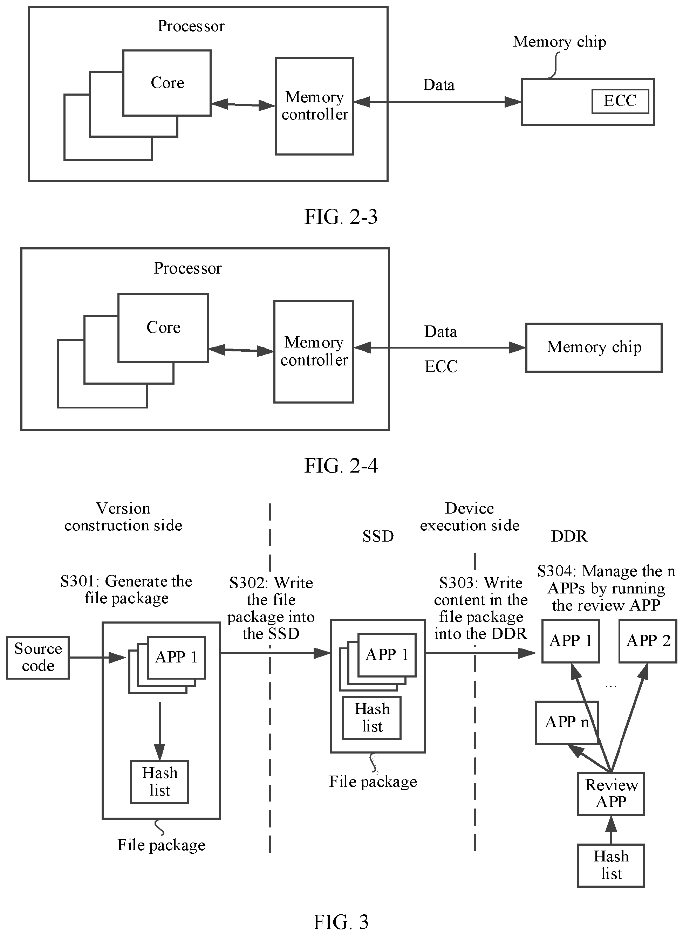

FIG. 2-3 shows an example of a diagram of a principle of on-die ECC;
FIG. 2-4 shows an example of a diagram of a principle of link ECC;
FIG. 3 shows an example of a possible procedure of a method according to this application;

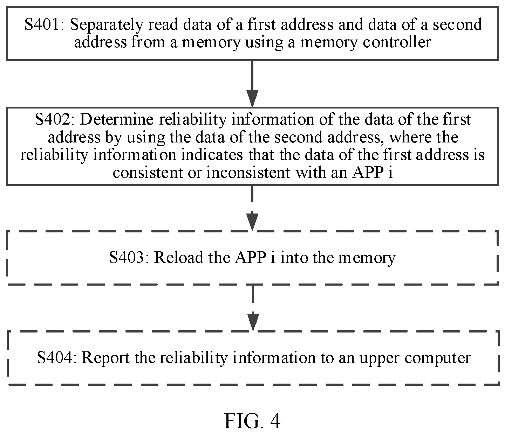

FIG. 4 shows an example of a possible procedure in which a core manages an APP i by running a review APP;

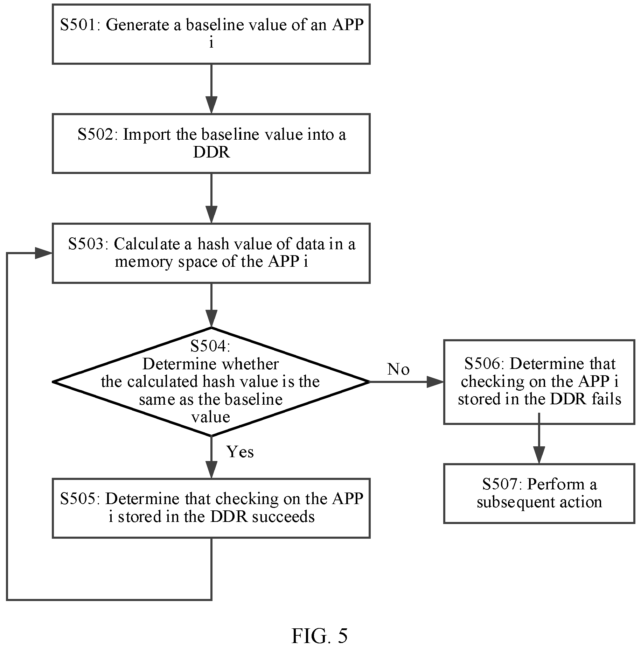

FIG. 5 shows an example of another procedure in which a core manages an APP i by running a review APP;

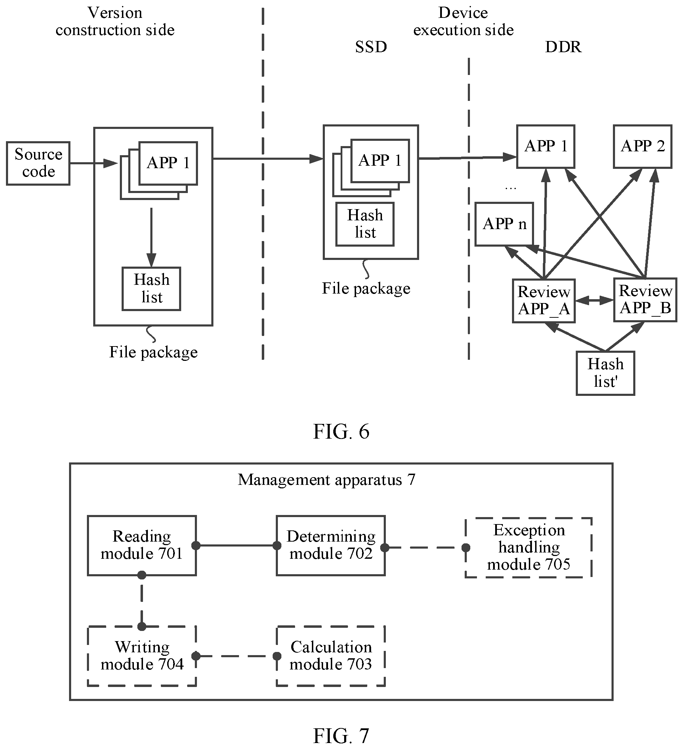

FIG. 6 shows an example of another possible procedure of a method according to this application; and
FIG. 7 shows an example of a possible structure of a management apparatus according to this application.

### DESCRIPTION OF EMBODIMENTS

FIG. 1 is a diagram of a computer device according to an embodiment of this application. As shown in FIG. 1, the computer device includes a processor and a DDR. The processor may be connected to the DDR through a DDR bus. DDR is short for double data rate (double data rate, DDR) synchronous dynamic random access memory (synchronous dynamic random access memory, SDRAM). In FIG. 1, an example in which a memory is the DDR is used. The DDR may be replaced with another type of memory, and correspondingly, different memories may communicate with the processor via different data buses. Therefore, the DDR bus may also be replaced with another type of data bus. A bus type is not limited in embodiments of this application. In addition, the computer device further includes various I/O devices, and the processor may access these I/O devices through a PCIe bus.

The processor (processor) is a calculation core and a control core of a device. The processor may include one or more processor cores (core). The processor may be an ultra-large-scale integrated circuit. An operating system and another software program are installed in the processor, so that the processor can access the memory and various PCIe devices. It may be understood that, in embodiments of the present invention, a core of the processor may be, for example, a central processing unit (central processing unit, CPU) or another application-specific integrated circuit (application-specific integrated circuit, ASIC). The processor may alternatively be another general-purpose processor, digital signal processor (digital signal processing, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. In actual application, the computer device may alternatively include a plurality of processors.

A memory controller (memory controller) is a bus circuit controller that controls the memory inside the computer device and is configured to manage and plan data transmission from the memory to the processor core (core for short). Data can be exchanged between the memory and the core via the memory controller. A memory controller configured to control the DDR may also be referred to as a DDR controller. As shown in FIG. 1, the memory controller may be integrated into the processor. A person skilled in the art may know that the memory controller may be an independent chip, is connected to the core through a system bus, and is connected to the memory through the DDR bus, or the memory controller may be built inside the processor. A specific location and an existence form of the memory controller are not limited in embodiments of the present invention. In actual application, the memory controller may control necessary logic to write data into the memory or read data from the memory. The memory controller may be a memory controller in a processor system like a general-purpose processor, a dedicated accelerator, a GPU, an FPGA, or an embedded processor.

The memory is a main storage of the computer device. The memory is typically configured to store various types of software that are running in an operating system, input and output data, information exchanged with an external memory, and the like. To improve an access speed of the processor, the memory needs to have an advantage of a high access speed. In a conventional computer system architecture, a dynamic random access memory (dynamic random access memory, DRAM) is usually used as a memory. The processor can access the memory at a high speed via the memory controller, and perform a read operation and a write operation on any memory cell in the memory. The memory may be the DRAM, or may alternatively be another random access memory, for example, a static random access memory (static random access memory, SRAM). In addition, the memory may alternatively be a read-only memory (read-only memory, ROM). For example, the read-only memory may be a programmable read-only memory (programmable read-only memory, PROM) or an erasable programmable read-only memory (erasable programmable read-only memory, EPROM). A quantity and a type of memories are not limited in embodiments. In addition, the memory may be configured to have a power protection function. The power protection function means that data stored in a storage is not lost when a system is powered off and then powered on again. A memory having the power protection function is referred to as a non-volatile storage.

An input/output (input/output, I/O) device refers to hardware that can perform data transmission, or may be understood as a device connected to an I/O interface. Common I/O devices include a network interface card, a printer, a keyboard, a mouse, and the like. The processor may access I/O devices through the PCIe bus. The processor may not be connected to the I/O device, or may be connected to I/O devices of a larger quantity.

A serial ATA (serial ATA, SATA) is a computer mechanical hard disk, and ATA is short for advanced technology attachment (advanced technology attachment). The processor may be connected to the SATA through a bus. The SATA can alternatively be used as an I/O device. The processor may access the SATA through the PCIe bus. A type of the external memory connected to the processor is not limited in this application. For example, the external memory may be a hard disk, a floppy disk, or an optical disc. The processor may not be connected to the external memory, or may be connected to external memories of a larger quantity and/or more types. A type of the SATA is not limited in this application. An example in which the SATA is a solid-state disk (solid-state disk, SSD) is used in the following.

It should be noted that the foregoing PCIe bus is merely an example, and may be replaced with another bus, for example, a unified bus (unified bus, UB).

An upper computer or a baseboard management controller (baseboard management controller, BMC) can upgrade firmware of the device, manage a running status of the device, and rectify faults. The processor may access the baseboard management controller through a management channel. The management channel may be the PCIe bus, or a bus like a USB or an I2C bus. The baseboard management controller may maintain a program code in the storage, including upgrading or restoring the program code, or the like. The baseboard management controller may further control, or perform other processing on, a power supply circuit or a clock circuit in the computer device. In conclusion, the baseboard management controller can manage the computer device in the foregoing manners. However, the baseboard management controller is only an optional device. In some implementations, the processor may directly communicate with a sensor, to directly manage and maintain the computer device.

The memory may be a main storage of the computer device. The memory is connected to the memory through the double data rate (double data rate, DDR) bus. The memory is typically configured to store various types of software that are running in the operating system, the input and output data, the information exchanged with the external memory, and the like. To improve the access speed of the processor, the memory needs to have the advantage of a high access speed. In the conventional computer system architecture, a dynamic random access memory (dynamic random access memory, DRAM) is usually used as a memory. The processor can access the memory at a high speed via the memory controller, and perform the read operation and the write operation on any memory cell in the memory.

In actual application, the memory may include one or more dual-inline-memory-modules (dual-inline-memory-module, DIMM). A DIMM may be used as an entity of a memory module, and a memory chip (or referred to as a memory IC) is arranged on a surface of the memory module. A memory rank (rank) is a group of parallel memory chips that can meet a data bit width requirement of a CPU memory controller. One DIMM may be arranged with one or more ranks.

A person skilled in the art may know that data is stored in the memory, and specifically, the data is stored in a memory cell in the memory chip. In embodiments of the present invention, the memory cell refers to a minimum memory cell (cell) for storing data. Generally, one memory cell can store 1-bit (bit) data. Certainly, some memory cells can alternatively implement multivalue storage. When the DRAM is used as the memory, memory cells in the DRAM (which may also be referred to as DRAM cells) are arranged and distributed into a matrix, and the matrix is referred to as a memory bank (memory bank) or a DRAM bank. In this manner, memory cells in the memory chip may be logically grouped into a plurality of memory banks (bank), and each memory bank may be considered as a memory array including a plurality of memory cells. Each memory cell (memory cell) in the memory bank is identified by using a row address and a column address of the memory cell. The memory controller can locate any memory cell in the memory bank via a corresponding row-and-column decoder. In embodiments of the present invention, the memory bank may also be referred to as a bank for short.

The memory chip may include a control and refresh circuit, a plurality of memory banks (memory bank), a row address buffer (row address buffer), a column address buffer (column address buffer), a row decoder (row decoder), and a column decoder (column decoder). The control and refresh circuit is configured to control a refresh operation on a memory cell.

In a memory access process, after the memory controller receives a memory access request from the core, the memory controller generates an address signal and a control signal based on the received memory access request, and send the generated address signal and control signal to the memory, to access the memory. The address signal may include a row address signal and a column address signal. The control signal may include a chip select (CS) signal, a write enable (WE) signal, a column access select (CAS) signal, a row access select (RAS) signal, and the like.

A person skilled in the art may know that the DRAM, which is a volatile storage, stores data as 0s and 1s by utilizing an amount of electricity stored in a capacitor to represent data 0 and 1. Due to a leakage phenomenon of the capacitor, electric charges can be maintained only for short time. Leakage of the capacitor causes charge drift, which causes an error in stored data and a fault like a bit (bit) flip. Currently, an ECC manner is generally used for improvement.

Currently, error checking and correcting (error checking and correcting, ECC) can be implemented in four manners: side-band (side-band) ECC, in-line (in-line) ECC, on-die (On-die) ECC, and link (link) ECC. The following describes the four types of ECC.

FIG. 2-1 shows an example of a diagram of side-band ECC. As shown in FIG. 2-1, the side-band ECC is usually implemented by using standard DDR (for example, DDR4 and DDR5) in application. For the side-band ECC, ECC data is sent to the memory as side-band data together with actual data. Usually, the actual data generally occupies a 64-bit data width, and the side-band data occupies an additional 8-bit data width, to store an ECC check code, and a total of 72-bit data width is required. A controller uses a same write command (WR)/read command (RD) to write/read the actual data and the ECC check code at the same time. Therefore, the side-band ECC solution does not require additional WR/RD command overheads. However, the side-band ECC needs support from the memory controller, and has no special requirement on a DDR chip.

FIG. 2-2 shows an example of a diagram of in-line ECC. As shown in FIG. 2-2, the in-line ECC is usually used in low power (low power, LP) DDR DRAM (LPDDR for short) or a small system with only one or two standard DRAM chips. In these scenarios, using the side-band ECC wastes bandwidth and increases DRAM costs. For example, the LPDDR has a fixed channel width (for example, a width of an LPDDR5/4/4X channel is 16 bits). If "64+8" side-band ECC is used, a 16-bit data width is needed to provide a channel for an 8-bit ECC check code, which causes a waste of bandwidth. For some scenarios that require a small DRAM capacity, for example, a scenario in which a memory controller controls one DRAM chip, the side-band ECC cannot be used. The in-line ECC provides a proper solution for these scenarios. In the in-line ECC, a storage space is specifically allocated to the ECC check code in a same DRAM chip, and data and the ECC check code are stored in the DRAM chip. The ECC check code and the data use a same channel. Therefore, a WR/RD command of the ECC check code is usually separated from a WR/RD command of the data. Consequently, this solution brings additional WR/RD command overheads. In addition, the in-line ECC needs support from the memory controller, and has no special requirement on a DDR/LPDDR chip.

FIG. 2-3 shows an example of a diagram of on-die ECC. As shown in FIG. 2-3, currently, the on-die ECC is mainly used for DDR5. The on-die ECC is an advanced registration admission and status (registration admission and status, RAS) function supported by a DDR5 system. During writing, a core transfers to-be-written data to a DRAM through a memory controller, and the DRAM calculates and stores ECC of the data internally. During reading, the DRAM performs error checking and correcting internally, and sends only error-checked and error-corrected data to the core via the memory controller. Consequently, the on-die ECC can only correct a single-bit error in a memory array, but cannot correct an error on a DDR channel. During application, the on-die ECC is usually used together with the side-band ECC. The on-die ECC is implemented and forms a closed loop inside a DDR/LPDDR chip, and does not need support from the memory controller.

FIG. 2-4 shows an example of a diagram of link ECC. As shown in FIG. 2-4, currently, the link ECC is mainly used for LPDDR5, to protect an LPDDR5 link or channel from being affected by an error unit. During writing, a memory controller transfers to-be-written data and a generated ECC check code (denoted as a check code 1) to a DRAM. The DRAM internally generates an ECC check code (denoted as a check code 2) based on the received data, and compares the ECC check code 1 with the ECC check code 2. When two codes are the same, the DRAM writes the data. When the two codes are different, the DRAM performs error correction on the data and then writes data (in this case, the ECC check code is not required to be written). During reading, the DRAM re-generates a new ECC check code (denoted as a check code 3) based on to-be-read data, and transfers the data and the check code 3 together to the memory controller. The memory controller generates an ECC check code (denoted as a check code 4) based on the received data, and compares the check code 3 with the check code 4. If two codes are different, the memory controller may perform error correction on the data and then transfer data to a core. The link ECC is usually used together with the in-line ECC to provide more complete protection. The link ECC can be implemented only with support from both the memory controller and DDR/LPDDR.

By analyzing an existing memory management method, the foregoing ECC is found to have some limitations. For example, the existing ECC has a limitation (referred to as limitation 1), that is, the ECC belongs to an on-site error correction technology. The memory controller checks reliability of corresponding data only after receiving a read request from the core, and when an error occurs in the data, the memory controller needs to perform on-site error correction. In addition, due to a limited repair capability of the ECC, only a single-bit error can be resolved, and a multi-bit error cannot be resolved. When a multi-bit error occurs in data indicated to be read by the read request, a read failure is caused. For example, the existing ECC has a limitation (referred to as limitation 2), that is, the side-band ECC needs to additionally increase a quantity of memory chips, which increases memory costs and restricts implementation of the side-band ECC on some cost-sensitive devices. For example, the existing ECC has a limitation (referred to as limitation 3), that is, an ECC technology requires the memory controller and/or the memory chip to support an ECC feature.

To resolve the foregoing technical problems, this application proposes that a core manages data in a memory by executing a program code. This helps identify, in a software means, whether data stored in the memory changes due to a memory reliability issue. Compared with an ECC technology that needs a controller and/or a DDR chip to support an ECC feature, a memory management method provided in this application does not need to change a design of a hardware circuit, helping reduce a requirement for memory management on DDR hardware, and expand usage scenarios of the memory management method. In some scenarios, an ECC chip of a CPU mini system may be removed to reduce hardware costs.

For ease of description, the program code is referred to as a review application (application, APP) in the following. An application may refer to an executable file. The executable file may also be referred to as a target file, and generally includes a code segment and a data segment. The code segment mainly includes instructions of a program, and is generally readable and executable, but is generally unwritable. The data segment mainly stores various global variable data (referred to as a program dynamic data segment) and/or static data (referred to as a program static data segment) that need/needs to be used in the code segment. The data segment is generally readable, writable, and executable.

FIG. 3 shows an example of a possible procedure of a method according to this application. As shown in FIG. 3, the method may include the following steps.

S301: A compilation device generates a file package.

In a version construction phase, the compilation device may compile a source code into n APPs, where n is a positive integer. Then, the compilation device may calculate a hash (hash) value of each APP, to form a hash list. The compilation device may pack the n APPs and the hash list into the file package.

It should be noted that the hash value of the APP is used as a baseline (or referred to as checking data) for checking whether the APP changes. A type of the checking data of the APP is not limited in this application. For example, the hash value of the APP may be replaced with another type of feature value like cyclic redundancy check (cyclic redundancy check, CRC).

S302: A core writes the file package into an SSD.

The core may obtain the foregoing file package, and then write the file package into the SSD. For example, the core may receive the file package from an upper computer, and then write the file package into the SSD. Alternatively, the SSD already has stored the foregoing file package before being inserted into a computer device, and correspondingly, the method may not include S302.

S303: The core writes the n APPs and the hash list in the file package into a DDR.

In a device startup phase or a device running phase, the core may read the file package in the SSD, and write the n APPs and the hash list in the file package into the DDR.

S304: The core manages the n APPs in the DDR by running a review APP stored in the DDR.

After the n APPs and the hash list are written into the DDR, the core may manage the n APPs by running the review APP stored in the DDR. For example, the hash value of the APP is for determining whether the APP stored in the DDR is consistent with an original APP, or whether a difference exists between the APP and the original APP.

S304 uses an example in which the core manages the n APPs. Optionally, the core may manage a part of the n APPs.

The following describes a specific manner in which the core manages an APP i by running the review APP stored in the DDR. i is a positive integer less than or equal to n.

FIG. 4 shows an example of a possible procedure in which a core manages an APP i by running a review APP. In S304 described above, for a manner in which the core manages the n APPs, refer to the procedure shown in FIG. 4. The core may separately perform the procedure shown in FIG. 4 on the n APPs in a serial manner or in a parallel manner.

It is assumed that an APP i and a hash value of the APP i are respectively stored in a first address and a second address in a DDR, and a review APP is stored in a third address in the DDR. Data stored in the DDR may change due to a DDR fault (for example, a bit flip). Therefore, to identify whether the APP i stored in the first address in the DDR changes, refer to FIG. 4, where the core may perform S401 and S402 by running the review APP.

S401: Separately read data of the first address and data of the second address from a memory using a memory controller.

In a process of running the review APP, the core may separately read the data of the first address and the data of the second address from the memory using the memory controller. The first address and the second address may be consecutive addresses or nonconsecutive addresses.

A specific manner in which the core separately reads the data of the first address and the data of the second address from the memory using the memory controller is not limited in this application. For example, the core may send a read request to the memory controller. The read request may carry a logical address of the first address and a logical address of the second address. The memory controller may perform address translation on the logical addresses in the read request, to determine the first address and the second address, and then separately read the data of the first address and the data of the second address from the DDR.

A quantity of read requests sent by the core to the memory controller is not limited in this application. For example, the core may send a single read request to the memory controller, and the read request indicates to read the data of the first address and the second address in the DDR. Alternatively, for example, the core may send a plurality of read requests to the memory controller, where at least one read request indicates to read the data of the first address in the DDR, and another read request indicates to read the data of the second address in the DDR.

A manner in which the core determines the hash value of the APP i from a hash list is not limited in this application. For example, each hash value recorded in the hash list is associated with a file location and/or a file name of a corresponding APP. Alternatively, the core calculates a feature value of an identifier of an APP corresponding to each hash value in the hash list; and in a storage space allocated to the hash list, determines a storage location of the hash value in the storage space based on the feature value corresponding to the hash value. When the review APP is needed, the core may calculate a feature value of an identifier of the APP i, and read a hash value of the APP i from the storage space based on the feature value.

S402: Determine reliability information of the data of the first address by using the data of the second address, where the reliability information indicates that the data of the first address is consistent with or inconsistent with the APP i.

After reading the data of the first address and the data of the second address, the core may determine the reliability information of the data of the first address by using the data of the second address. The reliability information indicates that the data of the first address is consistent with or inconsistent with the APP i.

For example, the core may calculate a hash value of the data of the first address, then compare the hash value with the data of the second address, and determine the reliability information of the data of the first address based on a comparison result. Optionally, if the hash value is the same as the data of the second address, the reliability information may indicate that the data of the first address is consistent with the APP i. If the hash value is different from the data of the second address, the reliability information may indicate that the data of the first address is inconsistent with the APP i.

Optionally, after determining, by using the data in the second address, that the data in the first address is inconsistent with the APP i, the core may record information about the first address in the reliability information. For example, the information about the first address may indicate at least one of a channel identifier, a rank identifier, a bank identifier, a row identifier, and a column identifier of a memory cell corresponding to the first address.

Optionally, when the reliability information indicates that the data of the first address is inconsistent with the APP i, the core may further perform S403 and S404.

S403: Reload the APP i into the memory.

When the reliability information indicates that the data of the first address is inconsistent with the APP i, the core may reload the APP i into the memory. For example, if the APP i is stored in another storage (for example, an SSD) other than the memory, the core may read the APP i from the SSD, and then write the APP i into the memory. As the data of the first address being inconsistent with the APP i may result from a fault (for example, a bit flip) occurring in the first address and/or the second address, the core may write the APP i into another address other than the first address and the second address. Optionally, the core may further reload the hash value of the APP i into the memory.

S404: Report the reliability information to an upper computer.

When the reliability information indicates that the data of the first address is inconsistent with the APP i, the core may report the reliability information to the upper computer. After receiving the reliability information, the upper computer may warn a user based on the reliability information, to prompt the user that the DDR is faulty and/or the APP i is abnormal. Optionally, after receiving the reliability information, the upper computer may restart a computer device, to reload each APP into the DDR.

The core may perform all or some steps in S403 and S404 by running the review APP or another APP other than the review APP, or perform all or some steps in S403 and S404 by using a hardware logic circuit.

In some examples, when the reliability information indicates that the data of the first address is inconsistent with the APP i, the core may perform S403 and skip S404. In some examples, when the reliability information indicates that the data of the first address is inconsistent with the APP i, the core may perform S404 and skip S403.

The foregoing uses an example in which the hash value of the APP i is calculated by another device (for example, a compilation device) other than the core. Optionally, the hash value of the APP i may be calculated by the core, and then the hash value of the APP i is written into the second address using the memory controller.

FIG. 5 shows an example of another procedure in which a core manages an APP i by running a review APP. Refer to FIG. 5. The procedure may include S501 to S507.

S501: Generate a baseline value of an APP i.

A core may calculate a feature value of the APP i stored in a DDR, and the feature value may be used as the baseline value for subsequently determining whether a bit flip error occurs in the DDR. A method used by the core to calculate the feature value is not limited in this application. For example, the core may select a hash algorithm, a CRC algorithm, or the like to calculate the feature value of the APP i. An algorithm (for example, the hash algorithm) with a hardware acceleration capability helps improve computing performance. The following uses an example in which the core obtains the baseline value of the APP i through calculation by using the hash algorithm.

S502: Import the baseline value into the DDR.

After obtaining the baseline value of the APP i through calculation, the core may write the baseline value into the DDR.

After both the APP i and the baseline value of the APP i are written into the DDR, the core may manage the APP i by using the baseline value of the APP i, for example, perform S503 to S507. A specific moment of the core managing the APP i by running a review APP stored in the DDR is not limited in this application. A trigger mechanism of step S503 is described in the following. For example, the core may periodically trigger step S503. For example, the core may add a timing task to a timer, and after duration of a time slice is set and the time slice is used up, the core performs S503.

S503: Calculate a hash value of data in a memory space of the APP i.

After both the APP i and the baseline value of the APP i are written into the DDR, the core may read data from the memory space of the APP i, and calculate a hash value of the data.

S504: Determine whether the calculated hash value is the same as the baseline value. If the two are the same, perform S505; or if the two are different, perform S506.

The core can read the baseline value from the DDR and compare the calculated hash value with the baseline value. If the calculated hash value is the same as the baseline value, S505 may be performed. If the calculated hash value is different from the baseline value, the core may perform S506.

S505: Determine that checking on the APP i stored in the DDR succeeds.

When the calculated hash value is the same as the baseline value, it may be considered that the APP i stored in the DDR does not change, it may be determined that the APP i stored in the DDR has no error, and it may be considered that the checking on the APP i succeeds.

Optionally, the timing task may be a task that is cyclically executed a plurality of times. The time slice may be set again after being used up. After the time slice is used up, the core may perform S503 again.

S506: Determine that checking on the APP i stored in the DDR fails.

When the calculated hash value is different from the baseline value, it may be considered that the APP i stored in the DDR changes, it may be determined that an error occurs in the APP i stored in the DDR, and it may be considered that the checking on the APP i fails.

S507: Perform a subsequent action.

After S506, the core identifies that an error occurs in the DDR, and may perform the subsequent action based on an identification result, for example, may perform at least one operation of warning, program reloading, and restarting. Step S507 may be understood with reference to S403 and/or S404.

Optionally, the core may calculate a hash value of the APP i by using another APP other than the review APP or a hardware logic circuit.

The foregoing uses an example in which checking data for checking an APP is a feature value of the APP. Optionally, the checking data of the APP may be the APP. In other words, in addition to writing the APP i into a first address of the DDR, the core further writes the APP i into a second address of the DDR, and uses data of the second address as checking data of data of the first address. A method in which the core determines, by using the data of the second address, whether the data of the first address is consistent with the APP i is not limited in this application. For example, the core may separately calculate a feature value of the data of the first address and a feature value of the data of the second address, and determine whether the data of the first address is consistent with the APP i by comparing the two feature values.

The core manages an APP in a memory by executing the review APP. This helps identify, in a software means, whether data stored in the memory changes due to a memory reliability issue. Compared with an ECC technology that needs a controller and/or a DDR chip to support an ECC feature, a memory management method provided in this application does not need to change a design of a hardware circuit, helping reduce a requirement for memory management on DDR hardware, and expand usage scenarios of the memory management method. In some scenarios, an ECC chip of a CPU mini system may be removed to reduce hardware costs.

In an existing ECC implementation, a memory controller and/or a DDR check/checks related data based on a corresponding read request only when a core runs to an APP i. When a multi-bit error occurs in the APP i requested by the read request, a reading failure may occur or even a device may restart abnormally.

In a process of the core running the review APP, the APP i managed by the core is an APP other than the review APP. This helps the core check, when running the review APP, a code segment that is not invoked, and helps identify in advance an error in the code segment that is not invoked, thereby helping perform pre-processing (for example, reloading) before the code segment is invoked. Compared with an ECC manner in which only a code segment being invoked is checked, this manner helps prevent the device from abnormally restarting due to a multi-bit error occurring in the code segment being invoked.

Optionally, when the review APP is in a running (running) state, the core may select, by running the review APP, an APP that is not in the running state in the DDR for management. Correspondingly, when the core manages the APP i by running the review APP, the APP i is not in the running state, and may be in a ready (ready) state, a block (block) state, or the like.

A specific moment of the core managing the APP i by running the review APP stored in the DDR is not limited in this application.

Optionally, in a process in which the core writes the n APPs and the hash list in the file package into the DDR, the core may manage an APP (for example, the APP i) that has been written into the DDR, and perform one-time checking on the APP i that has been stored in the DDR.

Optionally, the core may periodically manage the APP that has been stored in the DDR, and check the APP. For example, the core may manage the APP through a timing task. Specifically, the core may add a memory management task to a timer, and set a size of a corresponding time slice. After the time slice is used up, the core manages the APP already stored in the DDR.

The APP i stored in the DDR may change due to a reliability issue of the DDR. In a process of running the review APP, the core regularly/periodically manages the APP stored in the memory, helping identify, before the APP i is invoked, a change that occurs on the APP i due to the reliability issue of the DDR, and provide an operation space for a computer device to resolve DDR abnormality, thereby helping reduce or avoid a major problem such as abnormal restart of a device.

Optionally, the core may set time slices of different sizes for different APPs. For example, for two APPs of different importance, the core may set a shorter time slice for an APP of higher importance, and set a longer time slice for an APP of lower importance. In this way, the core checks the APP of higher importance more frequently, thereby helping ensure reliability of the APP. The size of the time slice is not limited in this application, and a user may flexibly set the size of the time slice as required.

In the foregoing, an example in which hash values in the hash list are hash values of all data in the APP is used. Optionally, the hash list may include a hash value of a part of data in the APP. Correspondingly, in S304, the core may determine, by using the hash value of the part of data, whether the part of data stored in the DDR is consistent with a part of data in an original APP. Correspondingly, in the procedure shown in FIG. 4 or FIG. 5, the APP i may be replaced with a part of data in the APP i, and a hash value of the APP i may be replaced with a hash value of the part of data.

As described above, an executable file generally includes a code segment and a data segment, where the data segment further includes a program dynamic data segment and a program static data segment. Table 1 shows an example of an impact on the APP i and a current countermeasure when a problem occurs in each segment.

**Table 1**

| Content category | Sub-category | Impact of bit flip | Current countermeasure | No. |
|---|---|---|---|---|
| Executable program (APP i) | Program code segment | Instruction fetch error, invalid instruction, and reset | Reset a CPU | Scenario 1 |
| | Program static data segment | Program abnormality | Re-execute | Scenario 2 |
| | Program dynamic data segment | Program abnormality | Re-execute | Scenario 3 |

Optionally, the hash list may include a hash value of the program code segment in the APP i. Correspondingly, the core may determine, by using the hash value, whether the program code segment in the APP i stored in the first address is incorrect, that is, identify an error in the scenario 1. If the error occurs, the APP i may be reloaded, helping avoid resetting the CPU due to an error of the program code segment in a running process of the APP i. Optionally, the hash list may include a hash value of the program static data segment and/or the program dynamic data segment in the APP i. Correspondingly, the core may determine, by using the hash value, whether a corresponding data segment in the APP i stored in the first address is incorrect, that is, identify an error in the scenario 2 and/or the scenario 3. If the error occurs, the APP i may be reloaded, helping avoid re-execution due to an error of the data segment in the running process of the APP i.

To ensure data integrity of the review APP, the DDR may further store a backup of the review APP. For ease of differentiation, the foregoing review APP is referred to as a review APP_A, and a backup of the review APP is referred to as a review APP_B. Reference may be made to an existing A/B mechanism. When an error occurs in the review APP_A, the core may manage, by running the review APP_B, the data stored in the DDR. For a manner in which the core manages, by running the review APP_B, the data stored in the DDR, refer to the foregoing manner in which the core manages, by running the review APP_A, the data stored in the DDR.

Before the error occurs in the review APP_A, the core may not run the review APP_B, or the core may run the review APP_A and the review APP_B in parallel to manage the data stored in the DDR.

In a process in which the core runs the review APP_A and the review APP_B in parallel, the core may manage, in a load balancing manner, different data stored in the DDR. Alternatively, in the process in which the core runs the review APP_A and the review APP_B in parallel, the core may manage same data stored in the DDR, and an upper computer may decide based on reliability information separately reported by the review APP_A and the review APP_B. For example, when the received reliability information reported by the two APPs indicates that the APP i stored in the DDR is faulty, the upper computer determines that the APP i stored in the DDR is faulty, and restarts the device or reloads the APP i. When only the reliability information reported by the review APP_A is received, the upper computer determines that the APP i stored in the DDR is suspected to be faulty, and may warn a user.

As the APP i managed by the core in a process of running the review APP is an APP other than the review APP, optionally, the core may manage the review APP_B in a process of running the review APP_A. For a process in which the core manages the review APP_B, refer to the foregoing process in which the core manages the APP i. For example, the core may perform the procedure shown in FIG. 4 or FIG. 5 on the review APP_B. In this way, even if the error occurs in the review APP_B stored in the DDR, it helps the core identify the error before the core runs the review APP_B and perform corresponding processing, thereby helping ensure that the core normally runs the review APP_B.

FIG. 6 shows an example of another possible procedure of a method according to this application. A difference between the procedure and the procedure shown in FIG. 3 lies in that, two review APPs (namely, the review APP_A and the review APP_B) may be stored in the DDR, the core may manage the review APP_B in the process of running the review APP_A, and the core may manage the review APP_A in the process of running the review APP_B. Correspondingly, in a hash list', in addition to including the hash values in the hash list in the file package, a hash value of the review APP_A and a hash value of the review APP_B may further be stored. For the process in which the core manages the review APP_B, refer to the foregoing process in which the core manages the APP i. For example, the core may perform the procedure shown in FIG. 4 or FIG. 5 on the review APP_B. For a process in which the core manages the review APP_A in the process of running the review APP_B, refer to the foregoing process in which the core manages the APP i. For example, the core may perform the procedure shown in FIG. 4 or FIG. 5 on the review APP_A.

The foregoing uses an example in which hash values of different APPs are stored in the hash list. A manner of storing hash values of a plurality of APPs is not limited in this application, provided that the core can read the hash value of the APP i.

The foregoing uses an example in which the core manages, by running the review APP, the APP or the part of data in the APP stored in the DDR. Optionally, the core may manage, by running the review APP, data of another type other than the APP stored in the DDR.

The foregoing uses an example in which the core manages the data in the DDR by running the review APP. A type of a storage managed by the core by running the review APP is not limited in this application. For example, the core may manage data in a flash (flash) memory and/or a hard disk by running the review APP.

The foregoing uses an example in which the review APP is stored in the managed storage. Optionally, the review APP may be stored in another storage other than the managed storage.

After reading the executable file (for example, the review APP), the core may generate a management apparatus 7 shown in FIG. 7. The management module 7 may be configured to perform all or a part of steps shown in S304 or FIG. 4, or all or a part of steps shown in FIG. 5. Refer to FIG. 7. The management apparatus 7 may include a reading module 701 and a determining module 702. The following describes a function of each software functional module.

The reading module 701 may be configured to separately read data of a first address and data of a second address from a storage through a memory controller, where the first address of the storage is for storing target data, and the second address is for storing checking data of the target data.

The determining module 702 may be configured to determine reliability information of the data of the first address by using the data of the second address, where the reliability information indicates that the data of the first address is consistent with or inconsistent with the target data.

For example, the storage is a DDR, the first address is for storing an APP i, and the second address is for storing a hash value of the APP i. The reading module 701 may be configured to perform S401, and the determining module 702 may be configured to perform S402.

Optionally, the reading module 701 may be configured to separately read the data of the first address and the data of the second address using the memory controller from the storage after first data and checking data of the first data are written into the storage. Alternatively, the reading module 701 may periodically and separately read the data of the first address and the data of the second address from the storage using the memory controller, for example, manage an APP through a timing task. Specifically, the core may add a memory management task to a timer, and set a size of a corresponding time slice. After the time slice is used up, the core manages the APP already stored in the DDR.

Optionally, the target data is data in one or more other executable files than the executable file, for example, data in the APP i.

Optionally, the target data is a program code segment, a program static data segment, or a program dynamic data segment in the one or more other executable files.

Optionally, the target data includes data in a duplicate of the executable file.

Optionally, the executable file is stored in the storage, for example, stored at a third address in the storage.

Optionally, the checking data of the target data is the target data or a feature value of the target data.

Optionally, the management apparatus further includes a calculation module 703 and a writing module 704. The calculation module 703 is configured to calculate the checking data of the target data, and the writing module 704 is configured to write the checking data of the target data into the second address using the memory controller.

Optionally, the management apparatus further includes an exception handling module 705. The exception handling module 705 is configured to: when the reliability information indicates that the data of the first address is inconsistent with the target data, reload the target data into the storage, and/or report the reliability information to an upper computer connected to a processing unit.

A person of ordinary skill in the art may understand that when software is used to implement each aspect of embodiments of this application or possible implementations of each aspect, all or a part of the foregoing each aspect or the possible implementations of each aspect may be implemented in a form of a computer program product. The computer program product refers to instructions (or computer-readable instructions, computer program instructions, functional programs, or program codes) stored in a computer-readable medium. When the instructions are loaded and executed on a computer, all or a part of the procedures or functions according to embodiments of this application are generated.

The computer-readable medium may be a computer-readable signal medium or a computer-readable storage medium. The computer-readable storage medium includes but is not limited to an electronic, magnetic, optical, electromagnetic, infrared, or semiconductor system, device, or apparatus, or any appropriate combination thereof. For example, the computer-readable storage medium is a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

In the specification, claims, and accompanying drawings of this application, the terms "first", "second", "third", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain", and any other variants mean to cover non-exclusive inclusion, so that a process, method, system, product, or device that includes a series of units is not necessarily limited to those units, but may include other units not expressly listed or inherent to such a process, method, product, or device. In embodiments of this application, the term "a plurality of" means two or more.

It is clear that a person skilled in the art can make various modifications and variations to the present invention without departing from the scope of the present invention. The present invention is intended to cover these modifications and variations of this application provided that they fall within the scope defined by the following claims of the present invention.

## Claims

1. A storage management method, wherein a storage is connected to a processing unit through a memory controller, a first address and a second address in the storage are respectively for storing target data and checking data of the target data, the processing unit runs an executable file to implement the method, and the method comprises:
separately reading data of the first address and data of the second address from the storage using the memory controller; and
determining reliability information of the data of the first address by using the data of the second address, wherein the reliability information indicates that the data of the first address is consistent with or inconsistent with the target data.

2. The method according to claim 1, wherein the separately reading the data of the first address and the data of the second address from the storage using the memory controller comprises:
periodically and separately reading the data of the first address and the data of the second address from the storage using the memory controller.

3. The method according to claim 1 or 2, wherein the target data is data in one or more other executable files than the executable file.

4. The method according to claim 3, wherein the target data is a program code segment, a program static data segment, or a program dynamic data segment in the one or more other executable files.

5. The method according to claim 3 or 4, wherein the target data comprises data in a duplicate of the executable file.

6. The method according to claim 5, wherein the executable file is stored at a third address in the storage.

7. The method according to any one of claims 1 to 6, wherein the checking data of the target data is the target data or a feature value of the target data.

8. The method according to claim 7, wherein the method further comprises:
calculating the checking data of the target data; and
writing the checking data of the target data into the second address using the memory controller.

9. The method according to any one of claims 1 to 8, wherein the reliability information indicates that the data of the first address is inconsistent with the target data, and the method further comprises:
reloading the target data into the storage; and/or
reporting the reliability information to an upper computer connected to the processing unit.

10. The method according to any one of claims 1 to 9, wherein the storage is a memory, a flash memory, or a hard disk.

11. A storage management apparatus, wherein a storage is connected to a processing unit through a memory controller, a first address and a second address in the storage are respectively for storing target data and checking data of the target data, the processing unit runs an executable file to generate the management apparatus, and the management apparatus comprises:
a reading module, configured to separately read data of the first address and data of the second address from the storage using the memory controller; and
a determining module, configured to determine reliability information of the data of the first address by using the data of the second address, wherein the reliability information indicates that the data of the first address is consistent with or inconsistent with the target data.

12. A computer device, comprising a processing unit and a memory controller, wherein the processing unit is connected to the memory controller, the memory controller is configured to connect to a storage, and the processing unit is configured to execute the method according to any one of claims 1 to 10 by running an executable file.

13. The computer device according to claim 12, wherein the processing unit and the memory controller are integrated into a same chip.

14. The computer device according to claim 12 or 13, wherein the computer device further comprises the storage.

15. A computer-readable storage medium, wherein the computer-readable storage medium stores a program code; and when the program code is executed by a computer device, the method according to any one of claims 1 to 10 is implemented.

16. A computer program product, wherein when a program code comprised in the computer program product is executed by a computer device, the method according to any one of claims 1 to 10 is implemented.
